# EUROPEAN PATENT APPLICATION

(11) **EP 4 749 904 A1**
(43) Date of publication of application: **27.05.2026**
(21) Application number: 24854364.7
(22) Date of filing: 05.08.2024
(51) Int. Cl.: H02M 3/158, H02M 3/157, H02M 1/00, H02M 1/08, G06F 1/26

(54) **ELECTRONIC DEVICE INCLUDING CONVERTER FOR PROVIDING POWER TO LOAD AND OPERATION METHOD THEREOF**

(30) Priority: 14.08.2023 KR 20230106229; 13.09.2023 KR 20230121618
(71) Applicant: Samsung Electronics Co., Ltd., Suwon-si, Gyeonggi-do 16677 (KR)
(72) Inventor: CHOI, Hangseok, Suwon-si Gyeonggi-do 16677 (KR); KIM, Taehyeok, Suwon-si Gyeonggi-do 16677 (KR); SON, Seungwoo, Suwon-si Gyeonggi-do 16677 (KR); KANG, Sangwoo, Suwon-si Gyeonggi-do 16677 (KR); CHOI, Kyusik, Suwon-si Gyeonggi-do 16677 (KR)
(74) Representative: Appleyard Lees IP LLP
(86) International application number: PCT/KR2024/011485
(87) International publication number: WO 2025/037812

(57) **Abstract**

This electronic device may be configured to: output a synchronization signal on the basis of an input voltage and a reference voltage of a converter; output a first control voltage on the basis of an output voltage and a target voltage of the converter; apply a gain to the first control voltage on the basis of the synchronization signal; output a second control voltage on the basis of the first control voltage to which the gain is applied and a signal related to the current of an inductor of the converter; output a PWM signal on the basis of the second control voltage and a sawtooth wave; and control a plurality of switches of the converter on the basis of the PWM signal. Various other embodiments are also possible.

## Description

### [Technical Field]

The disclosure relates to an electronic device including a converter that provides power to a load, and a method for operating the electronic device according to an embodiment.

### [Background Art]

Organic light emitting diode (OLED) is one type of light emitting diode (LED) semiconductor device composed of an organic compound layer. OLED displays are gaining attention as a next-generation display to replace liquid crystal displays (LCDs), and many companies are conducting research on it. OLED does not require a backlight, unlike LCD, because the device is self-luminous. The absence of a backlight allows for a thin profile and a lighter weight and provides clear readability even in outdoor environments. Further, OLED has a greater response speed than LCD, and has good power efficiency in real-world usage environments, because the power consumption of the device is reduced when displaying dark images.

When the driving voltage of OLED is 4.6[V], a lithium-ion battery in a mobile device has an operating voltage of 3[V] to 4.5[V]. Therefore, a design may be made to generate 4.6[V] based on the operating voltage of the battery, using a boost converter circuit.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

According to an embodiment, an electronic device may include a battery, a load, a converter configured to provide power to the load based on power provided from the battery and including a plurality of switches including a first switch and a second switch, a first comparator circuit, a second comparator circuit, a PWM control circuit, a third comparator circuit, a first acceleration circuit, and a controller. The controller may be configured to output, using the third comparator circuit, a synchronization signal based on an input voltage of the converter and a reference voltage. The controller may be configured to output, using the first comparator circuit, a first control voltage based on an output voltage of the converter and a target voltage. The controller may be configured to apply, using the first acceleration circuit, a gain to the first control voltage, based on the synchronization signal. The controller may be configured to output, using the second comparator circuit, a second control voltage based on the first control voltage to which the gain is applied and a signal related to a current of an inductor of the converter. The controller may be configured to output, using the PWM control circuit, a PWM signal based on the second control voltage and a sawtooth wave. The controller may be configured to control the plurality of switches of the converter, based on the PWM signal.

According to an embodiment, a method for operating an electronic device may include outputting a synchronization signal based on an input voltage of a converter of the electronic device and a reference voltage. The method may include outputting a first control voltage based on an output voltage of the converter and a target voltage. The method may include applying a gain to the first control voltage, based on the synchronization signal. The method may include outputting a second control voltage based on the first control voltage to which the gain is applied and a signal related to a current of an inductor of the converter. The method may include outputting, using the PWM control circuit, a PWM signal based on the second control voltage and a sawtooth wave. The method may include controlling a plurality of switches of the converter, based on the PWM signal.

According to an embodiment, in a non-transitory computer-readable recording medium storing instructions that, when executed individually and/or collectively by a controller of an electronic device, cause the electronic device to perform at least one operation, the at least one operation may include outputting a synchronization signal based on an input voltage of a converter of the electronic device and a reference voltage. The at least one operation may include outputting a first control voltage based on an output voltage of the converter and a target voltage. The at least one operation may include applying a gain to the first control voltage, based on the synchronization signal. The at least one operation may include outputting a second control voltage based on the first control voltage to which the gain is applied and a signal related to a current of an inductor of the converter. The at least one operation may include outputting, using the PWM control circuit, a PWM signal based on the second control voltage and a sawtooth wave. The at least one operation may include controlling a plurality of switches of the converter, based on the PWM signal.

### [Brief Description of Drawings]

FIG. 1 is a block diagram illustrating an electronic device in a network environment according to an embodiment.
FIG. 2 is a block diagram illustrating an electronic device according to an embodiment.
FIG. 3 is a block diagram of an electronic device according to an embodiment.
FIG. 4A is a circuit diagram of a circuit included in an electronic device according to an embodiment.
FIG. 4B is a diagram illustrating an operation of an electronic device according to an embodiment.
FIG. 5 is a diagram illustrating an operation of an electronic device according to an embodiment.
FIG. 6 is a diagram illustrating an operation of an electronic device according to a comparative example.
FIG. 7 is a diagram illustrating an operation of an electronic device according to a comparative example.
FIG. 8 is a diagram illustrating an operation of an electronic device according to a comparative example.
FIG. 9 is a diagram illustrating an operation of an electronic device according to an embodiment.
FIG. 10 is a diagram illustrating an operation of an electronic device according to an embodiment.
FIG. 11 is a flowchart illustrating a method for operating an electronic device according to an embodiment.
FIG. 12 is a flowchart illustrating a method for operating an electronic device according to an embodiment.
FIG. 13 is a flowchart illustrating a method for operating an electronic device according to an embodiment.
FIG. 14 is a flowchart illustrating a method for operating an electronic device according to an embodiment.

### [Mode for Carrying out the Invention]

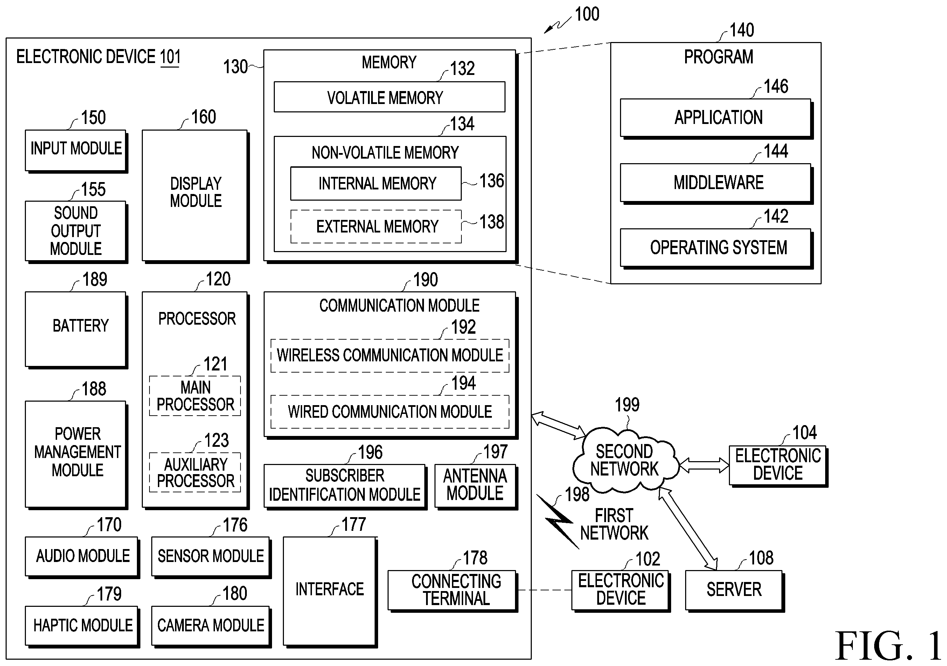

FIG. 1 is a block diagram illustrating an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

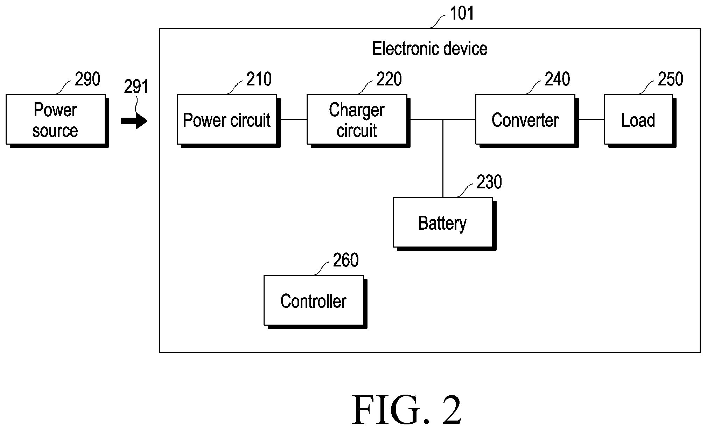

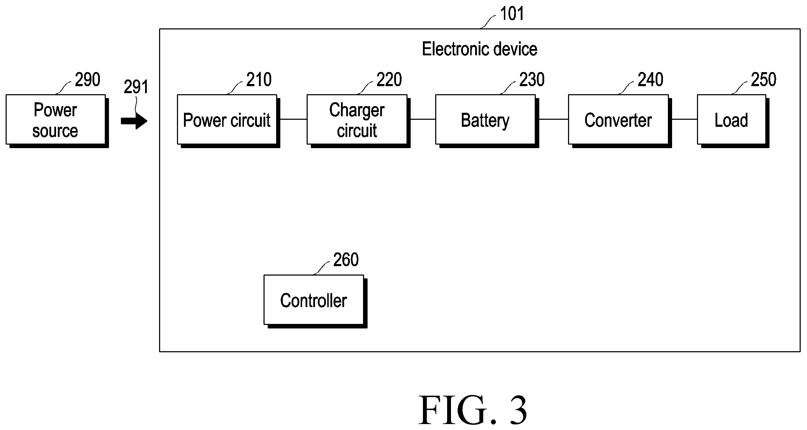

FIG. 2 is a block diagram illustrating an electronic device according to an embodiment. FIG. 3 is a block diagram illustrating an electronic device according to an embodiment.

According to an embodiment, the electronic device 101 may be a device (e.g., a notebook computer, a tablet, a portable communication device (e.g., a smartphone), a computer device, a portable multimedia device, a portable medical device, a camera, a wearable device, or a home appliance) that receives power 291 from a power source 290. The power source 290 may be a device (e.g., a wired charging device or wireless charging device) that provides the power 291 (e.g., wired power or wireless power) to the electronic device 101. The power source 290 may be a device (e.g., an adapter) that transmits external power to the electronic device 101. The type of the power source 290 is not limited as a device that provides power. The type of the electronic device 101 is not limited as a device that receives power.

Referring to FIGS. 2 and 3, according to an embodiment, the electronic device 101 may include a power circuit 210, a charger circuit 220, a battery 230, a converter 240, a load 250, and a controller 260. A connection structure of the charger circuit 220, the battery 230, and the converter 240 included in the electronic device 101 may be understood by referring to FIGS. 2 and 3. Referring to FIG. 2, an output terminal of the charger circuit 220 may be electrically connected to an input terminal of the converter 240 and the battery 230. Referring to FIG. 3, the output terminal of the charger circuit 220 may be electrically connected to an input terminal of the battery 230, and an output terminal of the battery 230 may be electrically connected to the input terminal of the converter 240. The connection structure of the charger circuit 220, the battery 230, and the converter 240 is not limited to the embodiments of FIGS. 2 and 3.

An operation of the electronic device 101 according to an embodiment may be controlled by the controller 260 of the electronic device 101. When it is said that the electronic device 101 performs a specific operation, this may mean that the electronic device 101 or a component included in the electronic device 101 is controlled by the controller 260 of the electronic device 101. The electronic device 101 may include one or more controllers 260 (e.g., one or more controllers including the processor 120 of FIG. 1). Hereinafter, for convenience of description, even when the controller 260 is implemented as a plurality of controllers, it will be referred to as an "operation of the electronic device 101" or an "operation of the controller 260".

According to an embodiment, the electronic device 101 (e.g., the controller 260) may receive power (e.g., wired power or wireless power) provided from the power source 290 through the power circuit 210. For example, the power circuit 210 may include a wired power circuit (e.g., a circuit including a wired connector) and/or a wireless power circuit (e.g., a circuit including a reception coil and a rectifier).

According to an embodiment, the electronic device 101 (e.g., the controller 260) may provide power to the charger circuit 220 through the power circuit 210. The electronic device 101 (e.g., the controller 260) may provide power to the battery 230 through the charger circuit 220. The charger circuit 220 may be a circuit that provides power to the battery 230 based on power provided from the external power source 290. The charger circuit 220 may receive power from the power circuit 210. The charger circuit 220 may provide power to the battery 230 based on the power provided from the power circuit 210. The charger circuit 220 may convert an input voltage to an output voltage. The output voltage of the charger circuit 220 may be an input voltage (e.g., a charging voltage) of the battery 230. The battery 230 may be charged based on the output voltage (e.g., charging voltage) of the charger circuit 220.

According to an embodiment, the electronic device 101 (e.g., the controller 260) may provide power to the load 250 through the converter 240. The load 250 may be a component of the electronic device 101, which consumes power. The converter 240 may provide power to the load 250 based on the power provided to the converter 240. Referring to FIG. 2, for example, the converter 240 may receive power from the battery 230. Referring to FIG. 2, for example, the converter 240 may receive power from the charger circuit 220. Referring to FIG. 3, the converter 240 may receive power from the battery 230. The converter 240 may convert an input voltage to a voltage suitable for the load 250 electrically connected to it. Although FIGS. 2 and 3 illustrate a single converter 240 and a single load 250, this is for convenience of description, and the numbers of converters 240 and loads 250 are not limited. For example, referring to FIG. 2, when there are two converters 240 and two loads 250, an input terminal of a first converter may be connected to the output terminal of the charger circuit 220 and the battery 230, and a first load may be connected to an output terminal of the first converter. An input terminal of a second converter may be connected to the output terminal of the charger circuit 220 and the battery 230, and a second load may be connected to an output terminal of the second converter. In this case, multiple converters 240 may be electrically connected to the output terminal of the charger circuit 220 and the battery 230. Referring to FIG. 3, for example, when there are two converters 240 and two loads 250, the input terminal of the first converter may be connected to the battery 230, and the first load may be connected to the output terminal of the first converter. The input terminal of the second converter may be connected to the battery 230, and the second load may be connected to the output terminal of the second converter. In this case, multiple converters 240 may be electrically connected to the battery 230.

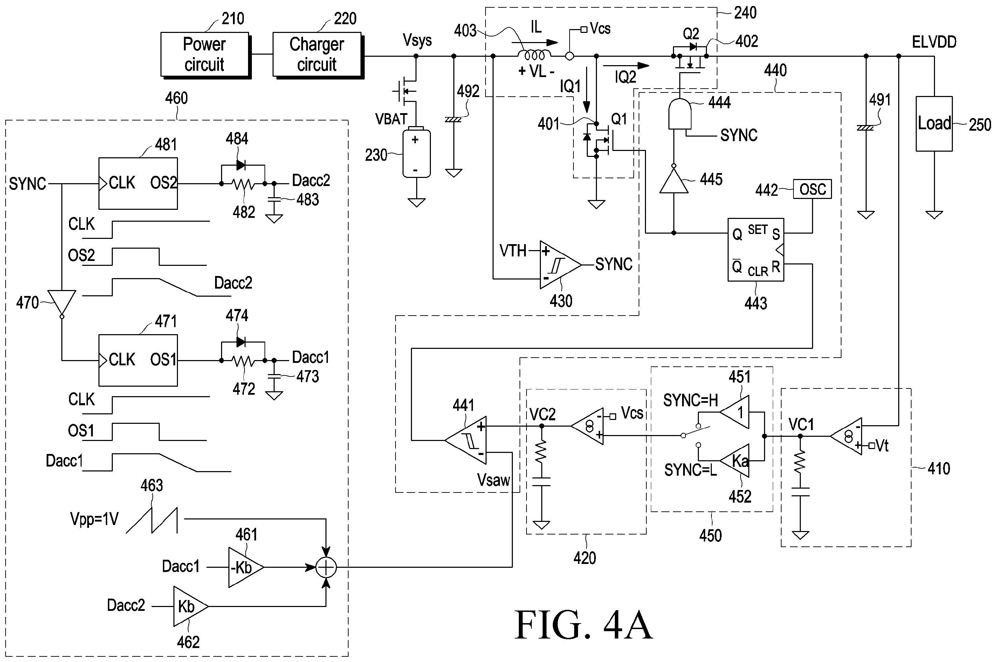

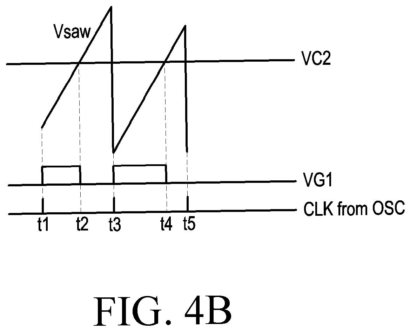

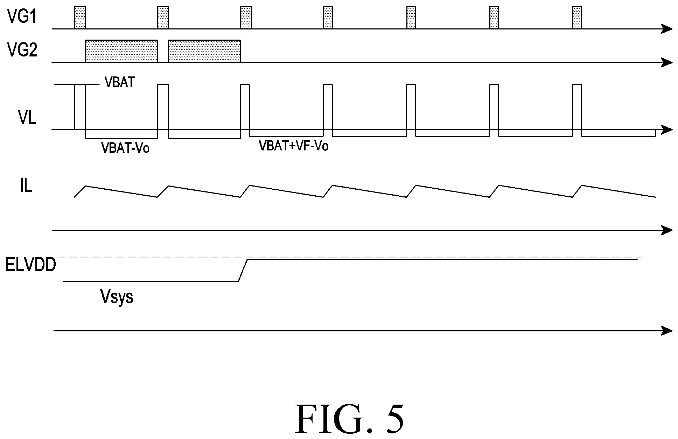

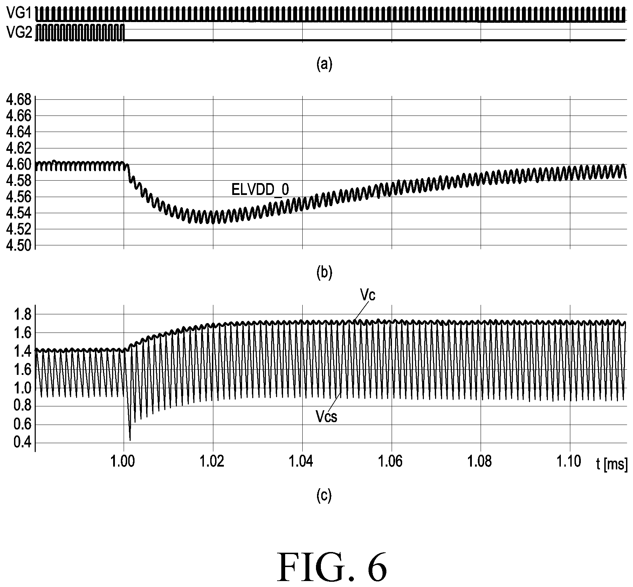

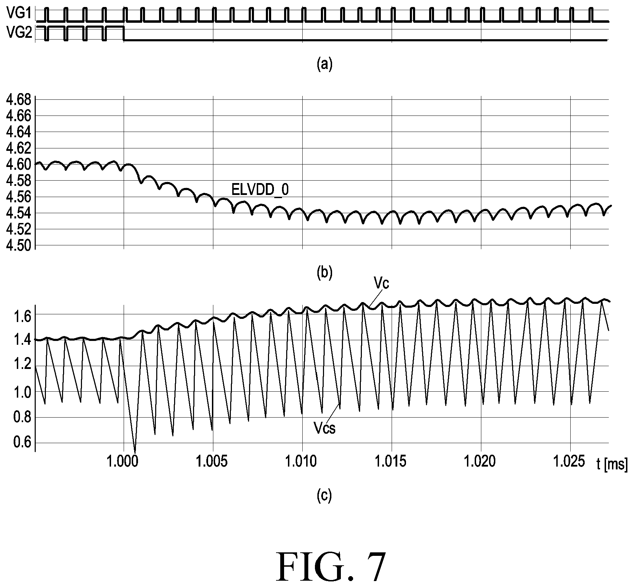

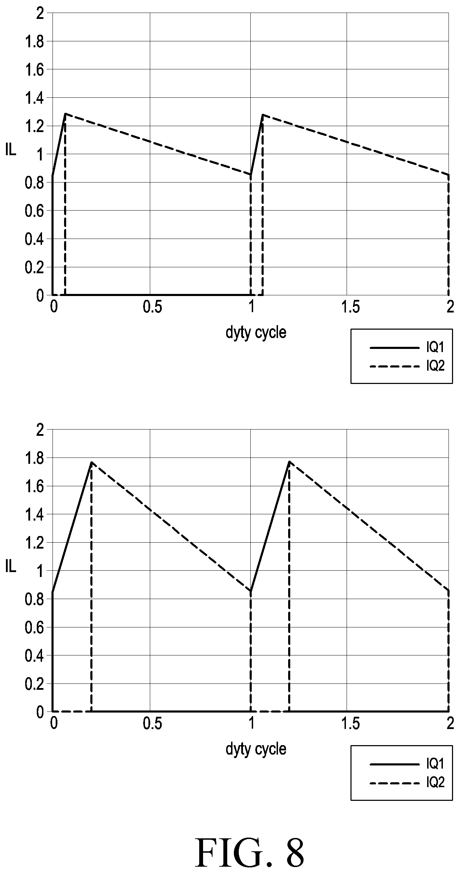

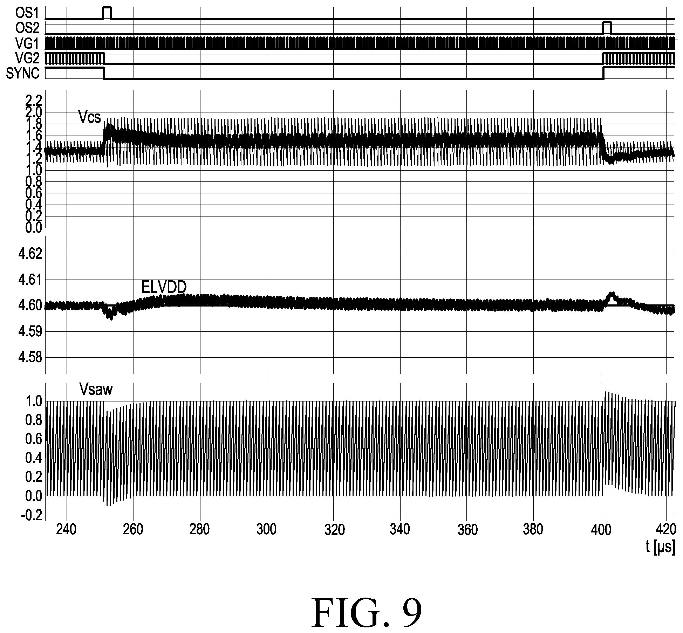

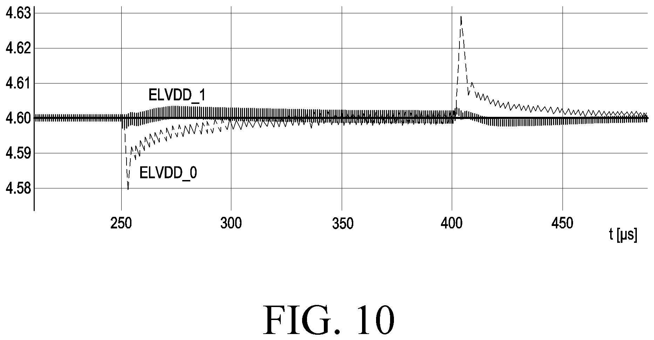

FIG. 4A is a circuit diagram of a circuit included in an electronic device according to an embodiment. FIG. 4A may be described with reference to the foregoing embodiments and FIG. 4B, FIG. 5, FIG. 6, FIG. 7, FIG. 8, FIG. 9, and FIG. 10. FIG. 4B is a diagram illustrating an operation of an electronic device according to an embodiment. FIG. 5 is a diagram illustrating an operation of an electronic device according to an embodiment. FIG. 6 is a diagram illustrating an operation of an electronic device according to a comparative example. FIG. 7 is a diagram illustrating an operation of an electronic device according to a comparative example. FIG. 8 is a diagram illustrating an operation of an electronic device according to a comparative example. FIG. 9 is a diagram illustrating an operation of an electronic device according to an embodiment. FIG. 10 is a diagram illustrating an operation of an electronic device according to an embodiment.

Referring to FIG. 4A, according to an embodiment, the electronic device 101 may include the power circuit 210, the charger circuit 220, the battery 230, the converter 240, and the load 250. The electronic device 101 may include a capacitor 491 and a capacitor 492. The electronic device 101 may include a first comparator circuit 410, a second comparator circuit 420, and a third comparator circuit 430. The electronic device 101 may include a pulse width modulation (PWM) control circuit 440. The electronic device 101 may include a first acceleration circuit 450. The electronic device 101 may include a second acceleration circuit 460. A connection structure of the charger circuit 220, the battery 230, and the converter 240 in FIG. 4A may correspond to FIG. 2. Although the following description is given with reference to FIG. 4A and FIG. 2, for convenience of description, the description of FIG. 4A is also applicable to the embodiment of the connection structure of the charger circuit 220, the battery 230, and the converter 240 in FIG. 3. For example, the converter 240, the first comparator circuit 410, the second comparator circuit 420, the third comparator circuit 430, the first acceleration circuit 450, and the second acceleration circuit 460 of FIG. 4A may also be applied to the embodiment of the connection structure of the charger circuit 220, the battery 230, and the converter 240 in FIG. 3.

Referring to FIG. 4A, according to an embodiment, the converter 240 may include a plurality of switches 401 and 402 (e.g., Q1 and Q2) and an inductor 403. The plurality of switches 401 and 402 may include a first switch 401 (e.g., Q1) and a second switch 402 (e.g., Q2). The first switch 401 may include a transistor (e.g., a metal-oxide-semiconductor field-effect transistor (MOSFET)) and a diode (e.g., a body diode). The second switch 402 may include a transistor (e.g., a MOSFET) and a diode (e.g., a body diode). The electronic device 101 (e.g., the controller 260) may control the converter 240 by controlling the plurality of switches 401 and 402 of the converter 240 based on control signals (e.g., PWM signals) (e.g., VG1 and VG2 in FIG. 5). The electronic device 101 (e.g., the controller 260) may control the plurality of switches 401 and 402 (e.g., Q1 and Q2) of the converter 240 based on PWM signals output through the PWM control circuit 440. The electronic device 101 (e.g., the controller 260) may control the first switch 401 (e.g., Q1) based on a driving gate signal (e.g., a driving voltage) (e.g., VG1 in FIG. 5) of the transistor of the first switch 401. The electronic device 101 (e.g., the controller 260) may control the second switch 402 (e.g., Q2) based on a driving gate signal (e.g., a driving voltage) (e.g., VG2 in FIG. 5) of the transistor of the second switch 402.

According to an embodiment, the electronic device 101 (e.g., the controller 260) may control the plurality of switches 401 and 402 (e.g., Q1 and Q2) of the converter 240, based on an operation mode (e.g., synchronous mode or asynchronous mode) of the converter 240. The electronic device 101 (e.g., the controller 260) may identify the operation mode (e.g., synchronous mode or asynchronous mode) of the converter 240 based on an input voltage (e.g., Vsys) of the converter 240 and a reference voltage (e.g., VTH) for the input voltage. For example, the converter 240 may operate in the synchronous mode, based on the input voltage (e.g., Vsys) of the converter 240 being less than or equal to the reference voltage (e.g., VTH). For example, the converter 240 may operate in the synchronous mode based on the input voltage (e.g., Vsys) of the converter 240 exceeding the reference voltage (e.g., VTH). For the synchronous mode or synchronous operation, the electronic device 101 (e.g., the controller 260) may perform PWM switching (e.g., alternating control) on the first switch 401 (e.g., Q1) and the second switch 402 (e.g., Q2). PWM switching (e.g., alternating control) of the first switch 401 (e.g., Q1) and the second switch 402 (e.g., Q2) may be referred to as the synchronous mode or synchronous operation. For example, for the asynchronous mode or asynchronous operation, the electronic device 101 (e.g., the controller 260) may perform PWM switching on the first switch 401 (e.g., Q1) and not apply a driving gate signal (e.g., a driving voltage) to the second switch 402 (e.g., Q2). The state where a driving gate signal is not applied to the transistor of the second switch 402 (e.g., Q2) may be referred to as the asynchronous mode or asynchronous operation. While the driving gate signal (e.g., driving voltage) is not applied to the second switch 402 (e.g., Q2) (e.g., to the transistor of the second switch 402 (e.g., Q2)), the second switch 402 (e.g., Q2) may operate as a body diode. While the driving gate signal (e.g., driving voltage) is not applied to the second switch 402 (e.g., Q2) (e.g., to the transistor of the second switch 402 (e.g., Q2)), a current (e.g., IQ2) applied to the second switch 402 (e.g., Q2) may flow through the diode (e.g., body diode) of the second switch 402 (e.g., Q2). As the current flows through the diode (e.g., body diode) of the second switch 402 (e.g., Q2), a voltage drop (e.g., VF in FIG. 5) may occur.

Referring to FIG. 5, while a driving voltage (e.g., VG1) is applied to the first switch 401 and a driving voltage (e.g., VG2) is not applied to the second switch 402, a voltage (e.g., VL) of the inductor 403 of the converter 240 may be a battery voltage (e.g., VBAT). While the driving voltage (e.g., VG1) is applied to the first switch 401 and the driving voltage (e.g., VG2) is not applied to the second switch 402, a current (e.g., IL) of the inductor 403 of the converter 240 may increase. While the driving voltage (e.g., VG1) is not applied to the first switch 401 and the driving voltage (e.g., VG2) is applied to the second switch 402, the voltage (e.g., VL) of the inductor 403 of the converter 240 may be the difference (e.g., VBAT - Vo) between the battery voltage (e.g., VBAT) and an output voltage (e.g., Vo) (e.g., ELVDD) of the converter 240. While the driving voltage (e.g., VG1) is not applied to the first switch 401 and the driving voltage (e.g., VG2) is applied to the second switch 402, the current (e.g., IL) of the inductor 403 of the converter 240 may decrease. While the driving voltage (e.g., VG1) is not applied to the first switch 401 and the driving voltage (e.g., VG2) is not applied to the second switch 402, the voltage (e.g., VL) of the inductor 403 of the converter 240 may be VBAT + VF - Vo. While the driving voltage (e.g., VG1) is not applied to the first switch 401 and the driving voltage (e.g., VG2) is not applied to the second switch 402, the current (e.g., IL) of the inductor 403 of the converter 240 may decrease.

Referring to FIG. 4A, according to an embodiment, the electronic device 101 may include the third comparator circuit 430. The electronic device 101 (e.g., the controller 260) may identify the operation mode (e.g., synchronous mode or asynchronous mode) of the converter 240 using the third comparator circuit 430. The third comparator circuit 430 may output a signal (e.g., synchronization signal) (e.g., SYNC in FIG. 4A) related to the operation mode of the converter 240, based on the input voltage (e.g., Vsys or VBAT) of the converter 240 and the reference voltage (e.g., VTH) for the input voltage of the converter 240. The electronic device 101 (e.g., the controller 260) may identify the operation mode (e.g., synchronous mode or asynchronous mode) of the converter 240, based on the synchronization signal output through the third comparator circuit 430. The electronic device 101 (e.g., the controller 260) may control the plurality of switches 401 and 402 (e.g., Q1 and Q2) of the converter 240, based on the synchronization signal output through the third comparator circuit 430. For example, the signal (e.g., synchronization signal) (e.g., SYNC in FIG. 4A) related to the operation mode may include a first signal (e.g., first synchronization signal) and a second signal (e.g., second synchronization signal). For example, the first signal (e.g., first synchronization signal) may correspond to the synchronous mode of the converter 240, and the second signal (e.g., second synchronization signal) may correspond to the asynchronous mode of the converter 240. The electronic device 101 (e.g., the controller 260) may output the first signal (e.g., first synchronization signal) corresponding to the synchronous mode of the converter 240 using the third comparator circuit 430, based on the input voltage (e.g., Vsys or VBAT) of the converter 240 being less than or equal to the reference voltage (e.g., VTH). The first signal (e.g., first synchronization signal) (e.g., SYNC = High) corresponding to the synchronous mode may cause the driving voltage (e.g., VG2) to be applied to the second switch 402. For example, the driving voltage (e.g., VG2) may be applied to the second switch 402 by applying the first signal (e.g., first synchronization signal) (e.g., SYNC = High) to a logic circuit 444 (e.g., AND gate) of the PWM control circuit 440. The electronic device 101 (e.g., the controller 260) may output the second signal (e.g., second synchronization signal) corresponding to the asynchronous mode of the converter 240 using the third comparator circuit 430, based on the input voltage (e.g., Vsys or VBAT) of the converter 240 exceeding the reference voltage (e.g., VTH). The second signal (e.g., second synchronization signal) (e.g., SYNC = Low) corresponding to the asynchronous mode may cause the driving voltage (e.g., VG2) not to be applied to the second switch 402. For example, the driving voltage (e.g., VG2) may not be applied to the second switch 402 by applying the second signal (e.g., second synchronization signal) (e.g., SYNC = Low) to the logic circuit 444 (e.g., AND gate) of the PWM control circuit 440.

Referring to FIG. 4A, according to an embodiment, the electronic device 101 may include the first comparator circuit 410. The electronic device 101 (e.g., the controller 260) may output a first control voltage (e.g., VC1) using the first comparator circuit 410. The first comparator circuit 410 may output the first control voltage (e.g., VC1), based on the output voltage (e.g., Vo) (e.g., ELVDD) of the converter 240 and a target voltage (e.g., Vt) for the output voltage of the converter 240. The output voltage (e.g., ELVDD) of the converter 240 may be the voltage of power provided from the converter 240 to the load 250. The target voltage (e.g., Vt) for the output voltage of the converter 240 may be determined based on the load 250. For example, to provide a voltage of 4.6[V] to the load 250, the target voltage (e.g., Vt) for the output voltage of the converter 240 may be determined as 4.6[V]. The reference voltage (e.g., VTH) for the input voltage of the converter 240 may be less than the target voltage (e.g., Vt) for the output voltage of the converter 240. For example, when the target voltage (e.g., Vt) for the output voltage of the converter 240 is 4.6[V], the reference voltage (e.g., VTH) for the input voltage of the converter 240 may be 4.3[V]. The electronic device 101 (e.g., the controller 260) may output the first control voltage (e.g., VC1) using the first comparator circuit 410, based on the output voltage (e.g., ELVDD) of the converter 240 and the target voltage (e.g., Vt) for the output voltage of the converter 240. For example, the electronic device 101 (e.g., the controller 260) may output the first control voltage (e.g., VC1) using the first comparator circuit 410, based on the difference between the output voltage (e.g., ELVDD) of the converter 240 and the target voltage (e.g., Vt), and the integral value of the difference. The first comparator circuit 410 may output the first control voltage (e.g., VC1) by adding the difference between the output voltage (e.g., ELVDD) of the converter 240 and the target voltage (e.g., Vt), and the integral value of the difference.

Referring to FIG. 4A, according to an embodiment, the electronic device 101 may include the first acceleration circuit 450. The electronic device 101 (e.g., the controller 260) may apply a gain to the first control voltage (e.g., VC1) output through the first comparator circuit 410 using the first acceleration circuit 450. The electronic device 101 (e.g., the controller 260) may apply a gain to the first control voltage (e.g., VC1) using the first acceleration circuit 450, based on the synchronization signal (e.g., SYNC) output through the third comparator circuit 430. The electronic device 101 (e.g., the controller 260) may apply a first gain (e.g., 1) to the first control voltage (e.g., VC1) using the first acceleration circuit 450, based on the first synchronization signal (e.g., SYNC = High). For example, the electronic device 101 (e.g., the controller 260) may apply the first gain (e.g., 1) to the first control voltage (e.g., VC1) using a first multiplication circuit 451 of the first acceleration circuit 450. The electronic device 101 (e.g., the controller 260) may apply the first gain (e.g., 1) to the first control voltage (e.g., VC1) using the first acceleration circuit 450, based on the input voltage (e.g., Vsys or VBAT) of the converter 240 being less than or equal to the reference voltage (e.g., VTH). Applying a gain of 1 may mean that the first control voltage (e.g., VC1) is output as is. The electronic device 101 (e.g., the controller 260) may apply a second gain (e.g., Ka) to the first control voltage (e.g., VC1 using the first acceleration circuit 450, based on the second synchronization signal (e.g., SYNC = Low). For example, the electronic device 101 (e.g., the controller 260) may apply the second gain (e.g., Ka) to the first control voltage (e.g., VC1) using a second multiplication circuit 452 of the first acceleration circuit 450. The electronic device 101 (e.g., the controller 260) may apply the second gain (e.g., Ka) to the first control voltage (e.g., VC1) using the first acceleration circuit 450, based on the input voltage (e.g., Vsys or VBAT) of the converter 240 exceeding the reference voltage (e.g., VTH). The second gain (e.g., Ka) may be greater than the first gain (e.g., 1). The second gain (e.g., Ka) may be determined by the target voltage (e.g., Vt) for the output voltage of the converter 240 and the voltage drop (e.g., VF) caused by a current flowing through the diode (e.g., body diode) of the second switch 402. For example, Ka = (Vt + VF)/Vt may hold. For example, when Vt = 4.6[V] and VF = 0.7[V], Ka = (4.6 + 0.7)/4.6 (approximately 1.15) may hold. Applying the gain of Ka may mean that the first control voltage (e.g., VC1) is increased by a factor of Ka. The first control voltage (e.g., VC1) to which the gain is applied may be output through the first acceleration circuit 450.

Referring to FIG. 4A, according to an embodiment, the electronic device 101 may include the second comparator circuit 420. The electronic device 101 (e.g., the controller 260) may output a second control voltage (e.g., VC2) using the second comparator circuit 420. The second comparator circuit 420 may compare a signal (e.g., Vcs) related to the inductor current (e.g., IL) of the inductor 403 of the converter 240 with the first control voltage (e.g., VC1). The second comparator circuit 420 may output the second control voltage (e.g., VC2), based on the signal (e.g., Vcs) related to the inductor current (e.g., IL) of the inductor 403 of the converter 240 and the first control voltage (e.g., VC1). The signal (e.g., Vcs) related to the inductor current (e.g., IL) may be a signal (e.g., voltage) that is proportional to the inductor current (e.g., IL) of the inductor 403 of the converter 240. The inductor current (e.g., IL) may be a current flowing through the inductor 403 of the converter 240 (e.g., by power from the battery 230). The electronic device 101 (e.g., the controller 260) may output the second control voltage (e.g., VC2) using the second comparator circuit 420, based on the signal (e.g., Vcs) related to the inductor current (e.g., IL) of the inductor 403 of the converter 240 and the first control voltage (e.g., VC1) to which a gain (e.g., 1 or Ka) is applied by the first acceleration circuit 450. For example, the electronic device 101 (e.g., the controller 260) may output the second control voltage (e.g., VC2) using the second comparator circuit 420, based on the difference between the signal (e.g., Vcs) related to the inductor current (e.g., IL) of the inductor 403 of the converter 240 and the first control voltage (e.g., VC1) to which the gain (e.g., 1 or Ka) is applied by the first acceleration circuit 450, and the integral value of the difference. The second comparator circuit 420 may output the second control voltage (e.g., VC2) by adding the difference between the signal (e.g., Vcs) related to the inductor current (e.g., IL) of the inductor 403 of the converter 240 and the first control voltage (e.g., VC1) to which the gain (e.g., 1 or Ka is applied by the first acceleration circuit 450, and the integral value of the difference.

Referring to FIG. 4A, according to an embodiment, the electronic device 101 may include the PWM control circuit 440. The electronic device 101 (e.g., the controller 260) may output PWM signals (e.g., VG1 and VG2) using the PWM control circuit 440. The PWM control circuit 440 may output the PWM signals (e.g., VG1 and VG2) based on the operation mode of the converter 240 (e.g., the signal (e.g., synchronization signal (SYNC)) related to the operation mode), and the second control voltage (e.g., VC2). For example, the PWM signals may include a first signal (e.g., VG1) corresponding to the first switch 401 (e.g., Q1) and a second signal (e.g., VG2) corresponding to the second switch 402 (e.g., Q2). The PWM control circuit 440 may include an oscillator 442, a controller 443, and at least one logic circuit (e.g., AND, OR, NAND, NOR, XOR, and XNOR). For example, referring to FIG. 4A, the at least one logic circuit (e.g., AND, OR, NAND, NOR, XOR, and XNOR) of the PWM control circuit 440 may include a first logic circuit 445 (e.g., NOT gate) and a second logic circuit 444 (e.g., AND gate), but this is merely an example. The PWM control circuit 440 may include a comparator 441. The comparator 441 may compare the second control voltage (e.g., VC2) with a sawtooth wave (e.g., Vsaw). The controller 443 may output an output signal (e.g., Q or Q-) based on the result of the comparison between the second control voltage (e.g., VC2) and the sawtooth wave (e.g., Vsaw) by the comparator 441, and a signal of the oscillator 442. The PWM control circuit 440 may output the PWM signals (e.g., VG1 and VG2) based on the output signal (e.g., Q or Q-) of the controller 443 and the operation mode of the converter 240 (e.g., the signal (e.g., synchronization signal (SYNC) related to the operation mode). The electronic device 101 (e.g., the controller 260) may control duty cycles of the PWM signals (e.g., VG1 and VG2) using the PWM control circuit 440. The output voltage (e.g., ELVDD) of the converter 240 may be controlled based on the control of the duty cycles of the PWM signals (e.g., VG1 and VG2). For example, the electronic device 101 (e.g., the controller 260) may control the duty cycles of the PWM signals (e.g., VG1 and VG2) output through the PWM control circuit 440 using the second acceleration circuit 460. The second acceleration circuit 460 may provide the sawtooth wave (e.g., Vsaw) to the PWM control circuit 440. The duty cycles of the PWM signals (e.g., VG1 and VG2) may be controlled based on the sawtooth wave (e.g., Vsaw) provided from the second acceleration circuit 460 to the PWM control circuit 440.

According to an embodiment, the electronic device 101 may not include the comparator 441 of the PWM control circuit 440 and the second acceleration circuit 460. When the electronic device 101 does not include the comparator 441 of the PWM control circuit 440 and the second acceleration circuit 460, the second control voltage (e.g., VC2) output through the second comparator circuit 420 may be provided to the controller 443 of the PWM control circuit 440.

According to an embodiment, the electronic device 101 may include the second acceleration circuit 460. The electronic device 101 (e.g., the controller 260) may provide the sawtooth wave (e.g., Vsaw) to the PWM control circuit 440 using the second acceleration circuit 460. The electronic device 101 (e.g., the controller 260) may apply an offset voltage to a sawtooth wave 463 (e.g., Vpp) using the second acceleration circuit 460 based on the synchronization signal (e.g., SYNC). The duty cycles of the PWM signals (e.g., VG1 and VG2) may be controlled by applying the offset voltage (e.g., Kb or -Kb) to the sawtooth wave 463. Referring to FIG. 4B, the offset voltage applied to the sawtooth wave 463 and the control of the duty cycles of the PWM signals (e.g., VG1 and VG2) based on the offset voltage may be understood. For reference, FIG. 8 is a graph illustrating the inductor current (e.g., IL) and the duty cycles of the PWM signals (e.g., VG1 and VG2), when the offset voltage (e.g., Kb or -Kb) is not applied to the sawtooth wave 463. Referring to FIGS. 4A and 8, the inductor current (e.g., IL) of the inductor 403 of the converter 240 may correspond to a current IQ1 of the first switch 401 during a first period (e.g., while the current flows through the first switch 401), and correspond to a current IQ2 of the second switch 402 during a second period (e.g., while the current flows through the second switch 402). The top graph of FIG. 8 may represent a duty cycle in the synchronous mode of the converter 240, and the bottom graph of FIG. 8 may represent a duty cycle in the asynchronous mode of the converter 240. Referring again to FIG. 4B, a signal (e.g., CLK from OSC) of the oscillator 442 may be provided to the controller 443 of the PWM control circuit 440 at t1, t3, and t5. The electronic device 101 (e.g., the controller 260) may provide a driving voltage (e.g., VG1) to the first switch 401 (e.g., Q1) using the PWM control circuit 440, based on the sawtooth wave (e.g., Vsaw) being less than the second control voltage (e.g., VC2). For example, in FIG. 4B, the offset voltage may not be applied to the sawtooth wave 463 from t1 to t3. While the offset voltage is not applied to the sawtooth wave 463 from t1 to t3, the driving voltage (e.g., VG1) may be provided to the first switch 401 (e.g., Q1) from t1 to t2, based on the result of comparison between the sawtooth wave (e.g., Vsaw) and the second control voltage (e.g., VC2). For example, in FIG. 4B, a negative offset voltage (e.g., - Kb) may be applied to the sawtooth wave 463 from t3 to t5. While the negative offset voltage (e.g., -Kb) is applied to the sawtooth wave 463 from t3 to t5, the driving voltage (e.g., VG1) may be provided to the first switch 401 (e.g., Q1) from t3 to t4 based on the result of comparison between the sawtooth wave (e.g., Vsaw) and the second control voltage (e.g., VC2). In FIG. 4B, a period from t3 to t4 may be longer than a period from t1 to t2.

Referring to FIG. 4A, according to an embodiment, the second acceleration circuit 460 may include one-shot vibrators (e.g., 471 and 481). The second acceleration circuit 460 may apply an offset voltage (e.g., Kb or -Kb) to the sawtooth wave 463 using the one-shot vibrators (e.g., 471 and 481). For example, the second acceleration circuit 460 may include a first one-shot vibrator 471 and a second one-shot vibrator 481. The second acceleration circuit 460 may include a resistor 472, a capacitor 473, and a diode 474, which correspond to the first one-shot vibrator 471. The second acceleration circuit 460 may include a resistor 482, a capacitor 483, and a diode 484, which correspond to the second one-shot vibrator 481. The second acceleration circuit 460 may output a first control signal (e.g., Dacc1) using the first one-shot vibrator 471. The first one-shot vibrator 471 may output a first signal (e.g., OS1) based on a clock signal (e.g., CLK) for a designated period. The first control signal (e.g., Dacc1) may be output based on the first signal (e.g., OS1). The second acceleration circuit 460 may apply a negative offset voltage (e.g., -Kb) to the sawtooth wave 463 based on the first control signal (e.g., Dacc1) corresponding to the first one-shot vibrator 471. The second acceleration circuit 460 may apply the negative offset voltage (e.g., -Kb) to the sawtooth wave 463 using a subtractor 461, based on the first control signal (e.g., Dacc1) corresponding to the first one-shot vibrator 471. The second acceleration circuit 460 may output a second control signal (e.g., Dacc2) using the second one-shot vibrator 481. The second one-shot vibrator 481 may output a second signal (e.g., OS2) based on the clock signal (e.g., CLK) for a designated period. The second control signal (e.g., Dacc2) may be output based on the second signal (e.g., OS2). The second acceleration circuit 460 may apply a positive offset voltage (e.g., Kb) to the sawtooth wave 463 based on the second control signal (e.g., Dacc2) corresponding to the second one-shot vibrator 481. The second acceleration circuit 460 may apply the positive offset voltage (e.g., Kb) to the sawtooth wave 463 using an adder 462, based on the second control signal (e.g., Dacc2) corresponding to the second one-shot vibrator 481. The offset voltage (e.g., Kb or -Kb) may be determined by the reference voltage (e.g., VTH), the target voltage (e.g., Vt), and the voltage drop (e.g., VF). The voltage drop (e.g., VF) may occur due to a current flowing through the diode (e.g., body diode) of the second switch 402. The reference voltage (e.g., VTH) may be a reference voltage for the input voltage (e.g., Vsys or VBAT) of the converter 240. The target voltage (e.g., Vt) may be a target voltage for the output voltage (e.g., Vo or ELVDD) of the converter 240. For example, Kb = (1-VTH/(Vt+VF)) - (1-VTH/Vt) may hold. For example, when VTH = 4.3[V], Vt = 4.6[V], and VF = 0.7[V], Kb = (1-4.3/(4.6+0.7))-(1-4.3/4.6) (approximately, 0.123) may hold. For example, applying the positive offset voltage Kb (approximately 0.123 = 12.3%) to the sawtooth wave 463 (e.g., Vpp) of 1[V] may mean that a positive offset voltage Kb corresponding to 12.3% of 1[V] is applied to the sawtooth wave 463 (e.g., Vpp). For example, applying the negative offset voltage - Kb (approximately -0.123 = -12.3%) to the sawtooth wave 463 (e.g., Vpp) of 1[V] may mean that an offset voltage -Kb corresponding to -12.3% of 1[V] is applied to the sawtooth wave 463 (e.g., Vpp). As described above, referring to FIG. 4B, based on the negative offset voltage -Kb being applied to the sawtooth wave 463 (e.g., Vpp), the duty cycles of the PWM signals (e.g., VG1 and VG2) may be lengthened. Based on the positive offset voltage Kb being applied to the sawtooth wave 463 (e.g., Vpp), the duty cycles of the PWM signals (e.g., VG1 and VG2) may be shortened. The second acceleration circuit 460 may include a logic circuit 470 (e.g., NOT gate). Based on the logic circuit 470 (e.g., NOT gate), a timing at which the first control signal (e.g., Dacc1) corresponding to the first one-shot vibrator 471 is generated and a timing at which the second control signal (e.g., Dacc2) corresponding to the second one-shot vibrator 481 is generated may be different. Referring to FIG. 9, the first signal (e.g., OS1) or the second signal (e.g., OS2) may be generated based on a change in the synchronization signal. For example, referring to FIG. 9, based on the synchronization signal (e.g., SYNC) changing from the first signal (e.g., the first synchronization signal) (e.g., SYNC = High) corresponding to the synchronous mode to the second signal (e.g., the second synchronization signal) (e.g., SYNC = Low) corresponding to the asynchronous mode, the first signal (e.g., OS1) corresponding to the first one-shot vibrator 471 may be generated. For example, referring to FIG. 9, based on the synchronization signal (e.g., SYNC) changing from the second signal (e.g., the second synchronization signal) (e.g., SYNC = Low) corresponding to the asynchronous mode to the first signal (e.g., the first synchronization signal) (e.g., SYNC = High) corresponding to the synchronous mode, the second signal (e.g., OS2) corresponding to the second one-shot vibrator 481 may be generated.

FIGS. 6 and 7 are diagrams illustrating an operation of an electronic device according to a comparative example. FIG. 7 is an enlarged graph of the graph in FIG. 6. Referring to FIGS. 6 and 7, when the operation mode of the converter 240 changes from the synchronous mode to the asynchronous mode (e.g., at t = 1[ms] in FIGS. 6 and 7), ripple may occur in the output voltage (e.g., Vo or ELVDD) of the converter 240 due to a voltage drop caused by a current flowing through the diode (e.g., body diode) of the second switch 402. FIGS. 6 and 7 represent a case where the electronic device 101 does not include the first acceleration circuit 450, the second acceleration circuit 460, and the comparator 441 of the PWM control circuit 440. The electronic device 101 (e.g., the controller 260) may resolve the ripple in the output voltage (e.g., Vo or ELVDD) of the converter 240 by controlling the peak of the inductor current (e.g., IL) of the inductor 403 of the converter 240 based on a control signal (e.g., Vc) based on a signal (e.g., Vcs) related to the inductor current (e.g., IL) of the inductor 403 of the converter 240. However, when the electronic device 101 does not include the first acceleration circuit 450, the second acceleration circuit 460, and the comparator 441 of the PWM control circuit 440 as in FIGS. 6 and 7, much time may be taken to resolve the ripple in the output voltage (e.g., Vo or ELVDD) of the converter 240, compared to the embodiment of FIG. 4A. For example, referring to FIG. 9, when the electronic device 101 includes an acceleration circuit (e.g., the first acceleration circuit 450 and/or the second acceleration circuit 460), the ripple in the output voltage (e.g., Vo or ELVDD) of the converter 240 may be resolved faster than the embodiment of FIGS. 6 and 7, due to a gain of the first acceleration circuit 450 and/or an offset voltage of the second acceleration circuit 460. For example, referring to FIG. 10, a time taken to resolve the ripple in the output voltage (e.g., ELVDD_1) of the converter 240 in the embodiment of FIG. 9 may be shorter than a time taken to resolve the ripple in the output voltage (e.g., ELVDD_0) of the converter 240 in the embodiment of FIGS. 6 and 7. Referring to FIG. 9, it may be understood that the gain (e.g., Ka) of the first acceleration circuit 450 is continuously applied in asynchronous mode, and the offset voltage (e.g., -Kb or Kb) of the second acceleration circuit 460 is applied for a designated period from a moment the operation mode of the converter 240 changes.

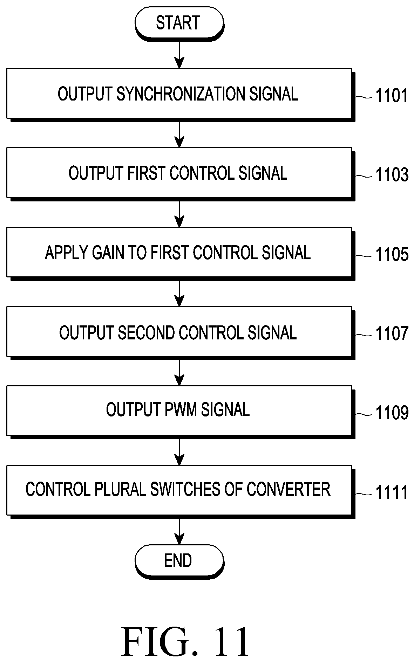

FIG. 11 is a flowchart illustrating a method for operating an electronic device according to an embodiment. FIG. 11 may be described with reference to the foregoing embodiments.

At least some of the operations in FIG. 11 may be omitted. The order of operations in FIG. 11 may be changed. Operations other than those in FIG. 11 may be performed before, during, or after performing the operations of FIG. 11.

Referring to FIG. 11, in operation 1101, according to an embodiment, the electronic device 101 (e.g., the controller 260) may output a synchronization signal (e.g., SYNC in FIG. 4A). The electronic device 101 may output the synchronization signal (e.g., SYNC in FIG. 4A) using the third comparator circuit 430, based on an input voltage (e.g., Vsys or VBAT in FIG. 4A) of the converter 240 and a reference voltage (e.g., VTH in FIG. 4A) for the input voltage. The synchronization signal (e.g., SYNC in FIG. 4A) may include a first signal (e.g., first synchronization signal) (e.g., SYNC = High) corresponding to synchronous mode and a second signal (e.g., second synchronization signal) (e.g., SYNC = Low) corresponding to asynchronous mode. For example, the electronic device 101 may output the first synchronization signal that causes a driving voltage (e.g., VG2) to be applied to the second switch 402 using the third comparator circuit 430 based on the input voltage of the converter 240 being less than or equal to the reference voltage. For example, the electronic device 101 may output the second synchronization signal that causes the driving voltage (e.g., VG2) not to be applied to the second switch 402 using the third comparator circuit 430, based on the input voltage of the converter 240 exceeding the reference voltage. Operation 1101 may be understood with reference to FIG. 4A.

In operation 1103, according to an embodiment, the electronic device 101 (e.g., the controller 260) may output a first control signal (e.g., first control voltage) (e.g., VC1 in FIG. 4A). The electronic device 101 may output the first control signal (e.g., first control voltage) (e.g., VC1 in FIG. 4A) using the first comparator circuit 410, based on an output voltage (e.g., ELVDD in FIG. 4A) of the converter 240 and a target voltage (e.g., Vt in FIG. 4A). Operation 1103 may be understood with reference to FIG. 4A.

In operation 1105, according to an embodiment, the electronic device 101 (e.g., the controller 260) may apply a gain (e.g., 1 or Ka in FIG. 4A) to the first control signal (e.g., first control voltage) (e.g., VC1 in FIG. 4A). The electronic device 101 may apply the gain (e.g., 1 or Ka in FIG. 4A) to the first control signal (e.g., first control voltage) (e.g., VC1 in FIG. 4A) using the first acceleration circuit 450 based on the synchronization signal of operation 1101. For example, the electronic device 101 may apply a first gain (e.g., 1) to the first control voltage (e.g., VC1) using the first acceleration circuit 450, based on the first synchronization signal (e.g., SYNC = High). For example, the electronic device 101 may apply a second gain (e.g., Ka) to the first control voltage (e.g., VC1) using the first acceleration circuit 450, based on the second synchronization signal (e.g., SYNC = Low). The second gain (e.g., Ka) may be greater than the first gain (e.g., 1). The second gain (e.g., Ka) may be determined by the target voltage (e.g., Vt in FIG. 4A) for the output voltage of the converter 240e and a diode voltage drop (e.g., VF in FIG. 5) of the second switch 402. Operation 1105 may be understood with reference to FIG. 4A.

In operation 1107, according to an embodiment, the electronic device 101 (e.g., the controller 260) may output a second control signal (e.g., second control voltage) (e.g., VC2 in FIG. 4A). The electronic device 101 may output the second control voltage (e.g., VC2 in FIG. 4A) using the second comparator circuit 420, based on a signal (e.g., Vcs in FIG. 4A) related to an inductor current (e.g., IL) of the inductor 403 of the converter 240, and the first control voltage (e.g., VC1 in FIG. 4A) to which the gain (e.g., 1 or Ka in FIG. 4A) is applied by the first acceleration circuit 450. Operation 1107 may be understood with reference to FIG. 4A.

In operation 1109, according to an embodiment, the electronic device 101 (e.g., the controller 260) may output PWM signals (e.g., VG1 and VG2 in FIG. 5). The electronic device 101 may output the PWM signals using the PWM control circuit 440. The electronic device 101 may output the PWM signals based on the second control voltage (e.g., VC2 in FIG. 4A) of operation 1107. When the electronic device 101 includes the second acceleration circuit 460 according to an embodiment, the electronic device 101 may output the PWM signals using the PWM control circuit 440, based on the second control voltage (e.g., VC2 in FIG. 4A) of operation 1107 and a sawtooth wave (e.g., Vsaw in FIG. 4A) provided from the second acceleration circuit 460. When the electronic device 101 does not include the second acceleration circuit 460 according to an embodiment, the electronic device 101 may output the PWM signals using the PWM control circuit 440, based on the second control voltage (e.g., VC2 in FIG. 4A) of operation 1107. Operation 1109 may be understood with reference to FIG. 4A.

In operation 1111, according to an embodiment, the electronic device 101 (e.g., the controller 260) may control a plurality of switches (e.g., 401 and 402 in FIG. 4A) of the converter 240 based on the PWM signals (e.g., VG1, VG2 in FIG. 5). The electronic device 101 may control the plurality of switches (e.g., 401 and 402 in FIG. 4A) of the converter 240 based on the PWM signals (e.g., VG1, VG2 in FIG. 5) output through the PWM control circuit 440. For example, the PWM signals may include a first signal (e.g., VG1 in FIG. 5) corresponding to the first switch 401 (e.g., Q1 in FIG. 4A) and a second signal (e.g., VG2 in FIG. 5) corresponding to the second switch 402 (e.g., Q2 in FIG. 4A). Operation 1111 may be understood with reference to FIG. 4A.

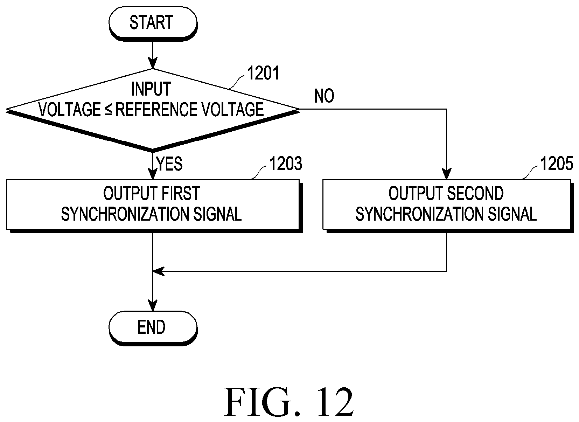

FIG. 12 is a flowchart illustrating a method for operating an electronic device according to an embodiment. FIG. 12 may be described with reference to the foregoing embodiments.

At least some of the operations in FIG. 12 may be omitted. The order of operations in FIG. 12 may be changed. Operations other than those in FIG. 12 may be performed before, during, or after performing the operations of FIG. 12.

Referring to FIG. 12, in operation 1201, according to an embodiment, the electronic device 101 (e.g., the controller 260) may compare an input voltage (e.g., Vsys or VBAT in FIG. 4A) of the converter 240 and a reference voltage (e.g., VTH in FIG. 4A) for the input voltage using the third comparator circuit 430. The electronic device 101 may identify an operation mode of the converter 240 based on a result of the comparison using the third comparator circuit 430. For example, the electronic device 101 may identify the operation mode of the converter 240 as the synchronous mode using the third comparator circuit 430, based on the input voltage of the converter 240 being less than or equal to the reference voltage. For example, the electronic device 101 may identify the operation mode of the converter 240 as the asynchronous mode using the third comparator circuit 430, based on the input voltage of the converter 240 exceeding the reference voltage. Operation 1201 may be understood with reference to FIG. 4A.

In operation 1203, according to an embodiment, the electronic device 101 (e.g., the controller 260) may output a first synchronization signal that causes a driving voltage (e.g., VG2) to be applied to the second switch 402 using the third comparator circuit 430, based on the input voltage of the converter 240 being less than or equal to the reference voltage. Operation 1203 may be understood with reference to FIG. 4A.

In operation 1205, according to an embodiment, the electronic device 101 (e.g., the controller 260) may output a second synchronization signal that causes the driving voltage (e.g., VG2) not to be applied to the second switch 402 using the third comparator circuit 430, based on the input voltage of the converter 240 exceeding the reference voltage. Operation 1205 may be understood with reference to FIG. 4A.

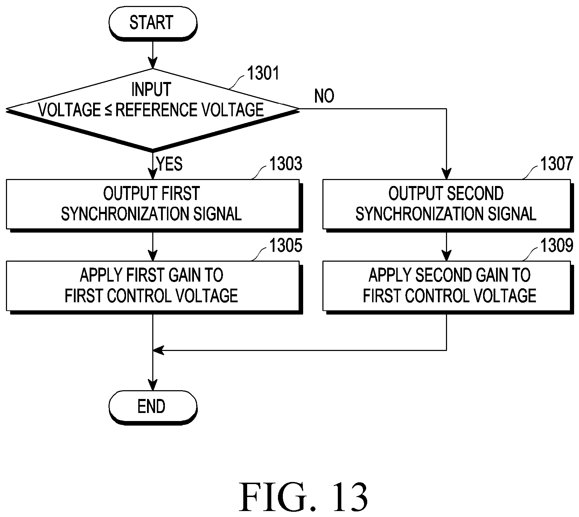

FIG. 13 is a flowchart illustrating a method for operating an electronic device according to an embodiment. FIG. 13 may be described with reference to the foregoing embodiments.

At least some of the operations in FIG. 13 may be omitted. The order of operations in FIG. 13 may be changed. Operations other than those in FIG. 13 may be performed before, during, or after performing the operations of FIG. 13.

Referring to FIG. 13, in operation 1301, according to an embodiment, the electronic device 101 (e.g., the controller 260) may compare an input voltage (e.g., Vsys or VBAT in FIG. 4A) of the converter 240 and a reference voltage (e.g., VTH in FIG. 4A) for the input voltage using the third comparator circuit 430. Operation 1301 may be understood with reference to FIG. 4A.

In operation 1303, according to an embodiment, the electronic device 101 (e.g., the controller 260) may output a first synchronization signal that causes a driving voltage (e.g., VG2) to be applied to the second switch 402 using the third comparator circuit 430, based on the input voltage of the converter 240 being less than or equal to the reference voltage. Operation 1303 may be understood with reference to FIG. 4A.

In operation 1305, according to an embodiment, the electronic device 101 (e.g., the controller 260) may apply a first gain (e.g., 1) to a first control voltage output through the first comparator circuit 401 based on the first synchronization signal, using the first acceleration circuit 450. Operation 1305 may be understood with reference to FIG. 4A.

In operation 1307, according to an embodiment, the electronic device 101 (e.g., the controller 260) may output a second synchronization signal that causes the driving voltage (e.g., VG2) not to be applied to the second switch 402 using the third comparator circuit 430, based on the input voltage of the converter 240 exceeding the reference voltage. Operation 1307 may be understood with reference to FIG. 4A.

In operation 1309, according to an embodiment, the electronic device 101 (e.g., the controller 260) may apply a second gain (e.g., Ka) to the first control voltage output through the first comparator circuit 401 based on the second synchronization signal, using the first acceleration circuit 450. Operation 1309 may be understood with reference to FIG. 4A.

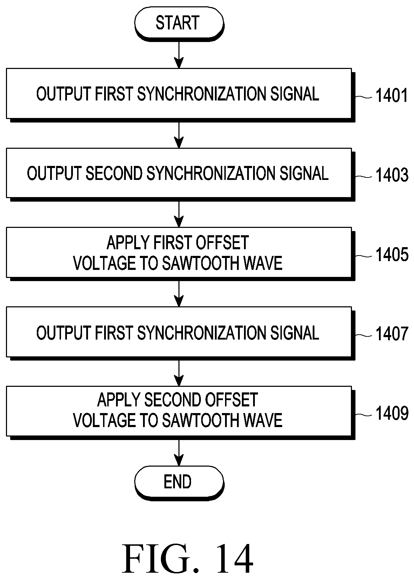

FIG. 14 is a flowchart illustrating a method for operating an electronic device according to an embodiment. FIG. 14 may be described with reference to the foregoing embodiments.

At least some of the operations in FIG. 14 may be omitted. The order of operations in FIG. 14 may be changed. Operations other than those in FIG. 14 may be performed before, during, or after performing the operations of FIG. 14.

Referring to FIG. 14, in operation 1401, according to an embodiment, the electronic device 101 (e.g., the controller) 260 may output a first synchronization signal that causes a driving voltage (e.g., VG2) to be applied to the second switch 402 using the third comparator circuit 430, based on an input voltage of the converter 240 being less than or equal to a reference voltage.

In operation 1403, according to an embodiment, the electronic device 101 (e.g., the controller 260) may output a second synchronization signal that causes the driving voltage (e.g., VG2) not to be applied to the second switch 402 using the third comparator circuit 430, based on the input voltage of the converter 240 exceeding the reference voltage. Based on the input voltage of the converter 240 increasing near the reference voltage, the synchronization signal may change from the first synchronization signal to the second synchronization signal. The electronic device 101 may output the second synchronization signal after outputting the first synchronization signal. Outputting the first synchronization signal may be outputting a synchronization signal (SYNC) of FIG. 9 as 1. Outputting the second synchronization signal may be outputting the synchronization signal (SYNC) of FIG. 9 as 0. Outputting the synchronization signal (SYNC) of FIG. 9 as 0 may mean not outputting the synchronization signal. The change of the synchronization signal may be understood with reference to operations 1401 and 1403. Operations 1401 and 1403 may be understood with reference to FIG. 4A.

In operation 1405, according to an embodiment, the electronic device 101 (e.g., the controller 260) may apply a first offset voltage (e.g., -Kb) to a sawtooth wave (e.g., Vpp 463 in FIG. 4A) based on the change of the synchronization signal (e.g., the change from the first synchronization signal to the second synchronization signal). The electronic device 101 may apply the first offset voltage (e.g., -Kb) to the sawtooth wave (e.g., Vpp 463 in FIG. 4A) using the second acceleration circuit 460 based on the change from the first synchronization signal that causes the driving voltage to be applied to the second switch 402 to the second synchronization signal that causes the driving voltage not to be applied to the second switch 402. The electronic device 101 may apply the first offset voltage (e.g., -Kb) to the sawtooth wave (e.g., Vpp 463 in FIG. 4A) using the second acceleration circuit 460 for a designated period. Operation 1405 may be understood with reference to FIG. 4A.

In operation 1407, according to an embodiment, the electronic device 101 (e.g., the controller 260) may output the first synchronization signal that causes the driving voltage (e.g., VG2) to be applied to the second switch 402 using the third comparator circuit 430, based on the input voltage of the converter 240 being less than or equal to the reference voltage. Based on the input voltage of the converter 240 decreasing near the reference voltage, the synchronization signal may change from the second synchronization signal to the first synchronization signal. The electronic device 101 may output the first synchronization signal after outputting the second synchronization signal. The change of the synchronization signal may be understood with reference to operations 1405 and 1407. Operations 1405 and 1407 may be understood with reference to FIG. 4A.

In operation 1409, according to an embodiment, the electronic device 101 (e.g., the controller 260) may apply a second offset voltage (e.g., Kb) to the sawtooth wave (e.g., Vpp 463 in FIG. 4A) based on the change of the synchronization signal (e.g., the change from the second synchronization signal to the first synchronization signal). The electronic device 101 may apply the second offset voltage (e.g., Kb) to the sawtooth wave (e.g., Vpp 463 in FIG. 4A) using the second acceleration circuit 460, based on the change from the second synchronization signal that causes the driving voltage not to be applied to the second switch 402 to the first synchronization signal that causes the driving voltage to be applied to the second switch 402. The electronic device 101 may apply the second offset voltage (e.g., Kb) to the sawtooth wave (e.g., Vpp 463 in FIG. 4A) using the second acceleration circuit 460 for a designated period. The first offset voltage (e.g., -Kb of operation 1405) and the second offset voltage (e.g., Kb of operation 1409) may be determined by the reference voltage for the input voltage of the converter 240, the target voltage for the output voltage of the converter 240, and the diode voltage drop of the second switch 402. Operation 1409 may be understood with reference to FIG. 4A.

Those skilled in the art will understand that the embodiments described herein may be applied in an interchangeable manner, within the applicable scope. For example, those skilled in the art will understand that at least some operations of an embodiment described herein may be omitted and applied, or at least some operations of the embodiments may be applied interchangeably.

The technical objects to be achieved from the disclosure are not limited to the technical objects mentioned above, and other unmentioned technical objects will be clearly understood by those skilled in the art from the following description.

The effects obtainable from the disclosure are not limited to the effects mentioned above, and other unmentioned effects will be clearly understood by those skilled in the art from the following description.

According to an embodiment, the electronic device 101 may include the battery 230, the load 250, the converter 240 configured to provide power to the load 250 based on power provided from the battery 230 and including the plurality of switches 401 and 402 including the first switch 401 and the second switch 402, the first comparator circuit 410, the second comparator circuit 420, the pulse width modulation (PWM) control circuit 440, the third comparator circuit 430, the first acceleration circuit 450, and the controller 120 or 260. The controller 120 or 260 may be configured to output, using the third comparator circuit 430, a synchronization signal based on an input voltage of the converter 240 and a reference voltage. The controller 120 or 260 may be configured to output, using the first comparator circuit 410, a first control voltage based on an output voltage of the converter 240 and a target voltage. The controller 120 or 260 may be configured to apply, using the first acceleration circuit 450, a gain to the first control voltage, based on the synchronization signal. The controller 120 or 260 may be configured to output, using the second comparator circuit 420, a second control voltage based on the first control voltage to which the gain is applied and a signal related to a current of the inductor 403 of the converter 240. The controller 120 or 260 may be configured to output, using the PWM control circuit 440, a PWM signal based on the second control voltage and a sawtooth wave. The controller 120 or 260 may be configured to control the plurality of switches 401 and 402 of the converter 240, based on the PWM signal.

According to an embodiment, the controller 120 or 260 may be configured to output, using the third comparator circuit 430, a first synchronization signal that causes a driving voltage to be applied to the second switch 402, based on the input voltage of the converter 240 being less than or equal to the reference voltage. The controller 120 or 260 may be configured to output, using the third comparator circuit 430, a second synchronization signal that causes the driving voltage not to be applied to the second switch 402, based on the input voltage of the converter 240 exceeding the reference voltage.

According to an embodiment, the reference voltage may be less than the target voltage.

According to an embodiment, the controller 120 or 260 may be configured to apply, using the first acceleration circuit 450, a first gain to the first control voltage, based on the first synchronization signal. The controller 120 or 260 may be configured to apply, using the first acceleration circuit 450, a second gain to the first control voltage, based on the second synchronization signal.

According to an embodiment, the first gain may be 1. The second gain may be greater than the first gain.

According to an embodiment, the second gain may be determined by the target voltage and a diode voltage drop of the second switch 402.

According to an embodiment, the electronic device 101 may include the second acceleration circuit 460. The controller 120 or 260 may be configured to apply, using the second acceleration circuit 460, an offset voltage to the sawtooth wave, based on the synchronization signal.

According to an embodiment, the controller 120 or 260 may be configured to apply, using the second acceleration circuit 460, a first offset voltage to the sawtooth wave, based on a change in the synchronization signal from a first synchronization signal that causes a driving voltage to be applied to the second switch 402 to a second synchronization signal that causes the driving voltage not to be applied to the second switch 402. The controller 120 or 260 may be configured to apply, using the second acceleration circuit 460, a second offset voltage to the sawtooth wave, based on a change of the synchronization signal from the second synchronization signal to the first synchronization signal.

According to an embodiment, the offset voltage may be determined by the reference voltage, the target voltage, and a diode voltage drop of the second switch 402.

According to an embodiment, the controller 120 or 260 may be configured to apply, using the second acceleration circuit 460, the offset voltage to the sawtooth wave for a designated period.

According to an embodiment, a method for operating the electronic device 101 include outputting a synchronization signal based on an input voltage of the converter 240 of the electronic device 101 and a reference voltage. The method may include outputting a first control voltage based on an output voltage of the converter 240 and a target voltage. The method may include applying a gain to the first control voltage, based on the synchronization signal. The method may include outputting a second control voltage based on the first control voltage to which the gain is applied and a signal related to a current of the inductor 403 of the converter 240. The method may include outputting, using the PWM control circuit 440, a PWM signal based on the second control voltage and a sawtooth wave. The method may include controlling the plurality of switches 401 and 402 of the converter 240, based on the PWM signal.

According to an embodiment, outputting the synchronization signal may include outputting a first synchronization signal that causes a driving voltage to be applied to the second switch 402 among the plurality of switches 401 and 402 including the first switch 401 and the second switch 402, based on the input voltage of the converter 240 being less than or equal to the reference voltage. Outputting the synchronization signal may include outputting, using the third comparator circuit 430, a second synchronization signal that causes the driving voltage not to be applied to the second switch 402, based on the input voltage of the converter 240 exceeding the reference voltage.

According to an embodiment, the reference voltage may be less than the target voltage.

According to an embodiment, applying the gain to the first control voltage may include applying a first gain to the first control voltage, based on the first synchronization signal. Applying the gain to the first control voltage may include applying a second gain to the first control voltage, based on the second synchronization signal.

According to an embodiment, the first gain may be 1. The second gain may be greater than the first gain.

According to an embodiment, the second gain may be determined by the target voltage and a diode voltage drop of the second switch 402.

According to an embodiment, the method may include applying an offset voltage to the sawtooth wave, based on the synchronization signal.

According to an embodiment, applying the offset voltage to the sawtooth wave may include applying a first offset voltage to the sawtooth wave, based on a change in the synchronization signal from a first synchronization signal that causes a driving voltage to be applied to the second switch 402 to a second synchronization signal that causes the driving voltage not to be applied to the second switch 402. Applying the offset voltage to the sawtooth wave may include applying a second offset voltage to the sawtooth wave, based on a change of the synchronization signal from the second synchronization signal to the first synchronization signal.

According to an embodiment, the offset voltage may be determined by the reference voltage, the target voltage, and a diode voltage drop of the second switch 402.

According to an embodiment, applying the offset voltage to the sawtooth wave may include applying the offset voltage to the sawtooth wave for a designated period.

According to an embodiment, in a non-transitory computer-readable recording medium storing instructions configured to cause the controller 260 of the electronic device 101 to perform at least one operation, the at least one operation may include outputting a synchronization signal based on an input voltage of the converter 240 of the electronic device 101 and a reference voltage. The at least one operation may include outputting a first control voltage based on an output voltage of the converter 240 and a target voltage. The at least one operation may include applying a gain to the first control voltage, based on the synchronization signal. The at least one operation may include outputting a second control voltage based on the first control voltage to which the gain is applied and a signal related to a current of the inductor 403 of the converter 240. The at least one operation may include outputting, using the PWM control circuit 440, a PWM signal based on the second control voltage and a sawtooth wave. The at least one operation may include controlling the plurality of switches 401 and 402 of the converter 240, based on the PWM signal.

According to an embodiment, in the recording medium, outputting the synchronization signal may include outputting a first synchronization signal that causes a driving voltage to be applied to the second switch 402 among the plurality of switches 401 and 402 including the first switch 401 and the second switch 402, based on the input voltage of the converter 240 being less than or equal to the reference voltage. Outputting the synchronization signal may include outputting, using the third comparator circuit 430, a second synchronization signal that causes the driving voltage not to be applied to the second switch 402, based on the input voltage of the converter 240 exceeding the reference voltage.

According to an embodiment, in the recording medium, the reference voltage may be less than the target voltage.

According to an embodiment, in the recording medium, applying the gain to the first control voltage may include applying a first gain to the first control voltage, based on the first synchronization signal. Applying the gain to the first control voltage may include applying a second gain to the first control voltage, based on the second synchronization signal.

According to an embodiment, in the recording medium, the first gain may be 1. The second gain may be greater than the first gain.

According to an embodiment, in the recording medium, the second gain may be determined by the target voltage and a diode voltage drop of the second switch 402.

According to an embodiment, in the recording medium, the at least one operation may include applying an offset voltage to the sawtooth wave, based on the synchronization signal.

According to an embodiment, in the recording medium, applying the offset voltage to the sawtooth wave may include applying a first offset voltage to the sawtooth wave, based on a change in the synchronization signal from a first synchronization signal that causes a driving voltage to be applied to the second switch 402 to a second synchronization signal that causes the driving voltage not to be applied to the second switch 402. Applying the offset voltage to the sawtooth wave may include applying a second offset voltage to the sawtooth wave, based on a change of the synchronization signal from the second synchronization signal to the first synchronization signal.

According to an embodiment, in the recording medium, the offset voltage may be determined by the reference voltage, the target voltage, and a diode voltage drop of the second switch 402.

According to an embodiment, in the recording medium, applying the offset voltage to the sawtooth wave may include applying the offset voltage to the sawtooth wave for a designated period.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example according to an embodiment, the module may be implemented in a form of an application-specific integrated circuit (ASIC).

Various embodiments as set forth herein may be implemented as software (e.g., a program) including one or more instructions that are stored in a storage medium (e.g., internal memory or external memory) that is readable by a machine (e.g., an electronic device). For example, a processor (e.g., a controller) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a battery (230);
a load (250);
a converter (240) configured to provide power to the load (250) based on power provided from the battery (230), the converter (240) including a plurality of switches (401; 402) including a first switch (401) and a second switch (402);
a first comparator circuit (410);
a second comparator circuit (420);
a pulse width modulation (PWM) control circuit (440);
a third comparator circuit (430);
a first acceleration circuit (450); and
a controller (120; 260) configured to:
output, using the third comparator circuit (430), a synchronization signal based on an input voltage of the converter (240) and a reference voltage,
output, using the first comparator circuit (410), a first control voltage based on an output voltage of the converter (240) and a target voltage,
apply, using the first acceleration circuit (450), a gain to the first control voltage, based on the synchronization signal,
output, using the second comparator circuit (420), a second control voltage based on the first control voltage to which the gain is applied and a signal related to a current of an inductor (403) of the converter (240),
output, using the PWM control circuit (440), a PWM signal based on the second control voltage and a sawtooth wave, and
control the plurality of switches (401; 402) of the converter (240), based on the PWM signal.

2. The electronic device (101) of claim 1, wherein the controller (120; 260) is configured to:
output, using the third comparator circuit (430), a first synchronization signal that causes a driving voltage to be applied to the second switch (402), based on the input voltage of the converter (240) being less than or equal to the reference voltage, and
output, using the third comparator circuit (430), a second synchronization signal that causes the driving voltage not to be applied to the second switch (402), based on the input voltage of the converter (240) exceeding the reference voltage.

3. The electronic device (101) of claim 1 or 2, wherein the reference voltage is less than the target voltage.

4. The electronic device (101) of any one of claims 1 to 3, wherein the controller (120; 260) is configured to:
apply, using the first acceleration circuit (450), a first gain to the first control voltage, based on the first synchronization signal, and
apply, using the first acceleration circuit (450), a second gain to the first control voltage, based on the second synchronization signal.

5. The electronic device (101) of any one of claims 1 to 4, wherein the first gain is 1, and
wherein the second gain is greater than the first gain.

6. The electronic device (101) of any one of claims 1 to 5, wherein the second gain is determined by the target voltage and a diode voltage drop of the second switch (402).

7. The electronic device (101) of any one of claims 1 to 6, further comprising a second acceleration circuit (460),
wherein the controller (120; 260) is configured to apply, using the second acceleration circuit (460), an offset voltage to the sawtooth wave, based on the synchronization signal.

8. The electronic device (101) of any one of claims 1 to 7, wherein the controller (120; 260) is configured to:
apply, using the second acceleration circuit (460), a first offset voltage to the sawtooth wave, based on a change in the synchronization signal from a first synchronization signal that causes a driving voltage to be applied to the second switch (402) to a second synchronization signal that causes the driving voltage not to be applied to the second switch (402), and
apply, using the second acceleration circuit (460), a second offset voltage to the sawtooth wave, based on a change of the synchronization signal from the second synchronization signal to the first synchronization signal.

9. The electronic device (101) of any one of claims 1 to 8, wherein the offset voltage is determined by the reference voltage, the target voltage, and a diode voltage drop of the second switch (402).

10. The electronic device (101) of any one of claims 1 to 9, wherein the controller (120; 260) is configured to apply, using the second acceleration circuit (460), the offset voltage to the sawtooth wave for a designated period.

11. A method for operating an electronic device (101) comprising:
outputting a synchronization signal based on an input voltage of a converter (240) of the electronic device (101) and a reference voltage,
outputting a first control voltage based on an output voltage of the converter (240) and a target voltage,
applying a gain to the first control voltage, based on the synchronization signal,
outputting a second control voltage based on the first control voltage to which the gain is applied and a signal related to a current of an inductor (403) of the converter (240),
outputting, using the PWM control circuit (440), a PWM signal based on the second control voltage and a sawtooth wave, and
controlling a plurality of switches (401; 402) of the converter (240), based on the PWM signal.

12. The method of claim 11, wherein outputting the synchronization signal includes:
outputting a first synchronization signal that causes a driving voltage to be applied to a second switch (402) among the plurality of switches (401; 402) including a first switch (401) and the second switch (402), based on the input voltage of the converter (240) being less than or equal to the reference voltage, and
outputting, using the third comparator circuit (430), a second synchronization signal that causes the driving voltage not to be applied to the second switch (402), based on the input voltage of the converter (240) exceeding the reference voltage.

13. The method of claim 11 or 12, wherein the reference voltage is less than the target voltage.

14. The method of any one of claims 11 to 13, wherein applying the gain to the first control voltage includes:
applying a first gain to the first control voltage, based on the first synchronization signal, and
applying a second gain to the first control voltage, based on the second synchronization signal.

15. A non-transitory computer-readable recording medium storing instructions that, when executed individually and/or collectively by a controller (120; 260) of an electronic device (101), cause the electronic device (101) to perform at least one operation,
wherein the at least one operation includes:
outputting a synchronization signal based on an input voltage of a converter (240) of the electronic device (101) and a reference voltage,
outputting a first control voltage based on an output voltage of the converter (240) and a target voltage,
applying a gain to the first control voltage, based on the synchronization signal,
outputting a second control voltage based on the first control voltage to which the gain is applied and a signal related to a current of an inductor (403) of the converter (240),
outputting, using the PWM control circuit (440), a PWM signal based on the second control voltage and a sawtooth wave, and
controlling a plurality of switches (401; 402) of the converter (240), based on the PWM signal.
